# EUROPÄISCHE PATENTSCHRIFT

(11) **EP 0 282 783 B1**
(45) Veröffentlichungstag und Bekanntmachung des Hinweises auf die Patenterteilung: **20.01.1993**
(21) Anmeldenummer: 88102759.3
(22) Anmeldetag: 24.02.1988
(51) Int. Cl.: G03D 15/10, G03B 21/64

(54) **Eintaschfolie für flache Gegenstände, insbesondere Diarahmen**
Sleeve member for flat products, especially slides
Feuille de montage de produits plats, spécialement des caches à diapositives

(30) Priorität: 18.03.1987 DE 3708880
(43) Veröffentlichungstag der Anmeldung: 21.09.1988
(73) Patentinhaber: GEIMUPLAST PETER MUNDT GmbH & Co. KG, 82490 Farchant (DE)
(72) Erfinder: Stemmer, Gottfried, Jr., D-8100 Garmish-Partenkirchen (DE)
(74) Vertreter: Lorenz, Eduard

(56) Entgegenhaltungen:
- CH-A- 407 582
- CH-A- 631 405
- DD-A- 60 485
- DE-A- 1 797 024
- DE-C- 2 944 009
- FR-A- 961 746
- FR-A- 1 084 264

## Beschreibung

Die Erfindung betrifft eine Eintaschfolie für Diarahmen, nach dem Oberbegriff des Anspruchs 1.

Eine derartige Eintaschfolie ist in der Praxis allgemein bekannt. Die vorbekannte Eintaschfolie besteht aus einer unteren und einer oberen Folie und ist als langgestrecktes Rechteck ausgebildet. Die beiden Längsseiten der übereinanderliegenden Folien sind miteinander verbunden. An einer Schmalseite sind die beiden Folien ebenfalls verbunden, während sie an der ge genüberliegenden Schmalseite nicht miteinander verbunden sind. Die an dieser Schmalseite dadurch geschaffene Einfüllöffnung gestattet ein Einschieben der Diarahmen in den von den beiden Folien gebildeten, endseitig geschlossenen Folienschlauch. Die Breite des Folienschlauches ist etwas größer als diejenige der einzuschiebenden, flachen Diarahmen. Die Länge des Folienschlauches ist etwas größer als ein ganzzahliges Vielfaches der Länge der Diarahmen. In die vorbekannte Eintaschfolie werden die Diarahmen nacheinander bzw. hintereinander eingeschoben. Ein Diarahmen kann nur dann einfach aus der vorbekannten Eintaschfolie entnommen werden, wenn es sich um den der Öffnung am nächsten liegenden Diarahmen handelt. Wenn ein dahinterliegender Diarahmen entnommen werden soll, um das Dia zu betrachten, müssen zunächst die in Bezug auf die Öffnung des Folienschlauches vor ihm liegenden Diarahmen entnommen werden. Um an den gewünschten Diarahmen heranzukommen, müssen also im ungünstigsten Fall sämtliche anderen Diarahmen ebenfalls aus der Eintaschfolie entnommen werden, nämlich dann, wenn der hinterste, am endseitig geschlossenen Ende des Folienschlauches liegende Diarahmen herausgenommen werden soll. Die vorbekannte Eintaschfolie gestattet also nicht einen einfachen, direkten Zugriff auf jeden beliebigen der aufbewahrten Diarahmen.

In der Praxis ist weiterhin ein System zur Aufbewahrung von Diarahmen bekannt, bei dem auf einer unteren, durchgehenden Folie mehrere nebeneinanderliegende Folientaschen aufgeschweißt sind. Die untere Folie und die die Taschen bildenden oberen Folien können auch durch eine Prägung miteinander verbunden sein. Mit dem zuletzt beschriebenen System ist ein einfacher und schneller Zugriff auf jeden beliebigen gespeicherten Diarahmen möglich. Dieses System weist jedoch den Nachteil auf, daß es nur umständlich gefüllt werden kann. Üblicherweise werden die Dias maschinell gerahmt. Die so hergestellten fertigen Diarahmen müssen in einer Eintaschfolie abgelegt werden. Dabei ist es von Vorteil, wenn durch eine einzige Öffnung der Eintaschfolie hintereinander mehrere fertige Diarahmen in die Eintaschfolie eingeschoben werden können. Bei dem zuletzt beschriebenen System ist dies jedoch nicht möglich, weil für jeden einzelnen fertigen Diarahmen eine eigene Tasche mit einer eigenen Öffnung vorgesehen ist.

In der Praxis ist ein weiteres System zum Eintaschen von Diarahmen bekannt, das mit dem zuletzt beschriebenen System jeweils eine eigene Tasche mit einer eigenen Öffnung gemeinsam hat. Die Eintaschfolie wird dadurch hergestellt, daß eine einlagige Folie Z-förmig gefaltet wird und daß anschließend Querschweißungen in einer Richtung senkrecht zur Z-förmigen Faltung angebracht werden, wobei sich diese Querschweißungen in einem Abstand etwas größer als die Breite eines Diarahmens befinden. Durch die Kombination der Z-förmigen Faltungen und der Querschweißungen werden also die einzelnen Aufbewahrungstaschen für die einzelnen Diarahmen gebildet. Dieses System weist dieselben Nachteile auf wie das oben beschriebene System.

Aus der DE-GM 71 44 654 ist eine Hülle mit aufeinanderfolgenden Taschen zum Aufnehmen von Diarahmen bekannt, bei der jede Tasche rundum geschlossen ist. Die Stege zwischen den Taschen haben durchreißbare Perforierungen. Die Hülle mit den aufeinanderfolgenden Taschen bildet eine Kette von Taschen. Diese Hüllenkette besteht aus zwei aufeinanderliegenden Bändern einer Kunststoff-Folie. Die Diarahmen können maschinell zwischen die Bänder kontinuierlich eingelegt werden. Anschließend werden die Taschen ebenfalls maschinell rundum geschlossen und die Stege zwischen den Taschen durchreißbar perforiert.

Aus der CH-PS 350 544 ist eine Eintaschfolie für Diarahmen bekannt, die aus einer unteren und einer oberen Folie besteht. Auch hier werden die Diarahmen zunächst zwischen die beiden Folien eingelegt. Anschließend werden zwischen den Diarahmen diese einfassende Nähte gebildet, beispielsweise durch Hochfrequenzverschweißung.

Aufgabe der Neuerung ist es, eine Eintaschfolie für Diarahmen nach dem Oberbegriff des Anspruchs 1 zu schaffen, die ein einfaches und schnelles Füllen gestattet und aus der die Diarahmen einzeln entnehmbar sind.

Gemäß der Erfindung wird diese Aufgabe durch die im kennzeichnenden Teil des Anspruchs 1 angegebenen Merkmale gelöst. In einer Folie ist mindestens ein quer verlaufender Schlitz in einem der Länge eines Diarahmens entsprechenden Abstand vom geschlossenen Ende vorgesehen. Die Eintaschfolie wird von einer unteren und einer oberen Folie gebildet, wobei die beiden Folien an einem Ende und seitlich zur Aufnahme der Diarahmen miteinander verbunden sind. Beim Befüllen der Eintaschfolie können die Diarahmen also durch die zwischen den beiden Folien gebildete, an dem dem geschlossenen Ende gegenüberliegenden Ende befindliche Öffnung hintereinander eingeschoben werden.

Die Öffnung der Eintaschfolie liegt dabei der am geschlossenen Ende befindlichen Verbindung der beiden Folien gegenüber. Nachdem die Diarahmen in die Eintaschfolie eingeschoben worden sind, kann ein beliebiger Diarahmen durch den in einer Folie vorgesehenen quer verlaufenden Schlitz entnommen werden, ohne daß die anderen Diarahmen ihren Platz verlassen müssen bzw. ebenfalls entnommen werden müssen. Der quer verlaufende Schlitz ist dabei in einem der Länge eines Diarahmens entsprechenden Abstand vom geschlossenen Ende der Eintaschfolie vorgesehen. Wenn in der Eintaschfolie mehrere Diarabmen aufbewahrt werden sollen, sind in einer Folie mehrere quer verlaufende Schlitze vorgesehen, die voneinander jeweils einen der Länge eines Diarahmens entsprechende Abstand aufweisen.

Es ist also möglich, die Diarahmen hintereinander durch eine einzige Öffnung der Eintaschfolie einzuschieben, wodurch die Eintaschfolie ein einfaches und schnelles Füllen gestattet. Durch die Schlitze sind die Diaramen dennoch auf einfache Weise einzeln entnehmbar; es ist also nicht erforderlich, über den gewünschten Diarahmen hinaus noch weitere Diarahmen zu entnehmen.

In einer vorteilhaften Weiterbildung ist die Folie im Bereich des Schlitzes überlappend ausgebildet. Hierdurch wird zum einen ein Eindringen von Schmutz und Staub in die Eintaschfolie und damit eine Beeinträchtigung der Dias vermieden. Zum anderen wird dadurch erreicht, daß bei der Befüllung der Eintaschfolie die Diarahmen nicht an die die Schlitze begrenzenden Kanten der Folie anstoßen können. Wenn die Diarahmen beim Befüllen der Eintaschfolie an diese Kanten anstoßen würden, könnte die Folie beschädigt werden und würde die Gefahr bestehen, daß die Eintaschfolie nicht vollständig gefüllt wird.

Vorzugsweise überlappt die näher am geschlossenen Ende der Eintaschfolie liegende Folie die an den Schlitz anschließende Folie von außen. Die Schlitze werden also reusenartig überlappt. Ein Verhaken der Diarahmen beim Einfüllvorgang wird dadurch mit Sicherheit ausgeschlossen.

Die Seitenkante einer Eintaschfolie kann mit einer weiteren Eintaschfolie verbunden sein. Nachdem eine Eintaschfolie gefüllt worden ist, wird die aus den beiden Eintaschfolien bestehende Einheit in einer Richtung senkrecht zur Einfüllrichtung fortbewegt. Dann kann der Einfüllvorgang mit der nächsten Eintaschfolie wiederholt werden.

Die Verbindungslinie der Eintaschfolie mit der seitlich anschließenden Eintaschfolie kann perforiert sein. Hierdurch können die verschiedenen nebeneinanderliegenden Eintaschfolien bei Bedarf voneinander getrennt werden. Dies ist besonders beim automatischen, maschinellen Befüllen von einer Vielzahl von Eintaschfolien von Vorteil. Wenn beispielsweise ein aus 24 oder 36 Einzelbildern bestehender Film vollständig gerahmt und eingetascht ist, kann die anschließende Perforation aufgetrennt werden. Für jeden aus 24 oder 36 Bildern bestehenden Film kann auf diese Weise eine Einheit aus mehreren nebeneinander liegenden und miteinander verbundenen Eintaschfolien hergestellt werden.

Die untere und obere Folie können seitlich durch eine Rändelung miteinander verbunden sein. Sie können auch durch eine Verschweißung miteinander verbunden sein.

Die endseitige Verbindung der unteren und der oberen Folie kann ebenfalls durch eine Rändelung oder durch eine Verschweißung vorgenommen werden. Es ist jedoch auch möglich, eine einlagige Folie zu falten, um durch diese Faltung die endseitige Verschließung vorzunehmen.

Die obere und die untere Folie können aus demselben Material gebildet sein. Es ist jedoch auch möglich, für die obere und untere Folie jeweils verschiedene Materialien zu verwenden.

Beispielsweise kann eine der beiden Folien aus einer Klarsichtfolie bestehen, während die andere als Streufolie ausgebildet ist.

Ein Verfahren zum Eintaschen von Diarahmen in eine Eintaschfolie der oben beschriebenen Art ist dadurch gekennzeichnet, daß die die Schlitze aufweisende Folie im Bereich der Schlitze angehoben wird und die Diarahmen anschließend in die Eintaschfolie durch das offene Ende eingeschoben werden.

Vorzugsweise wird diejenige Folie im Bereich eines Schlitzes angehoben, die in Einfüllrichtung der Diarahmen hinter dem Schlitz liegt, damit beim Einfüllvorgang ein Verhaken der Diarahmen verhindert wird.

Das Anheben der Folie kann durch Vakuumaufnehmer erfolgen.

In einer vorteilhaften Weiterbildung werden die seitlich verbundenen Eintaschfolien senkrecht zur Einfüllrichtung der Diarahmen bewegt. Zunächst wird also eine Eintaschfolie mit Diarahmen gefüllt. Nach Beendigung dieses Füllvorgangs wird die aus mehreren miteinander verbundenen Eintaschfolien bestehende Einheit in eine Richtung senkrecht zur Einfüllrichtung der Diarahmen weiterbewegt, um daran anschließend einen weiteren Einfüllvorgang zu ermöglichen.

Die Bewegung der Eintaschfolien senkrecht zur Einfüllrichtung der Diarahmen kann durch Markierungen auf der Eintaschfolie gesteuert werden, die von einer Abtasteinrichtung erfaßt werden. Hierdurch wird es ermöglicht, die jeweils nächste freie Eintaschfolie im Verhältnis zu den einzuschiebenden Diarahmen exakt zu positionieren.

Die Abtasteinrichtung kann aus einer Lichtschranke bestehen, die optische Markierungen abtastet. In diesem Fall kann der Antrieb der miteinander verbundenen Eintaschfolien senkrecht zur Einfüllrichtung der Diarahmen durch einen Reibradantrieb erfolgen.

Die Markierungen können auch aus Transportöffnungen bestehen, in die entsprechende Erhebungen eines geeigneten Antriebs eingreifen. In diesem Fall kann ein Traktionsantrieb, beispielsweise wie bei einem Computerdrucker, verwendet werden.

Ausführungsbeispiele der Erfindung werden nachstehend anhand der Zeichnung im einzelnen erläutert. In der Zeichnung zeigt
- Fig. 1: eine Seitenansicht einer Eintaschfolie mit einander überlappend ausgebildeten Schlitzen,
- Fig. 2: eine perspektivische Ansicht der in Fig. 1 gezeigten Eintaschfolie,
- Fig. 3: eine Eintaschfolie mit einander nicht überlappenden Schlitzen und
- Fig. 4: die in Fig. 3 dargestellte Eintaschfolie in der Entnahmestellung für den letzten Diarahmen.

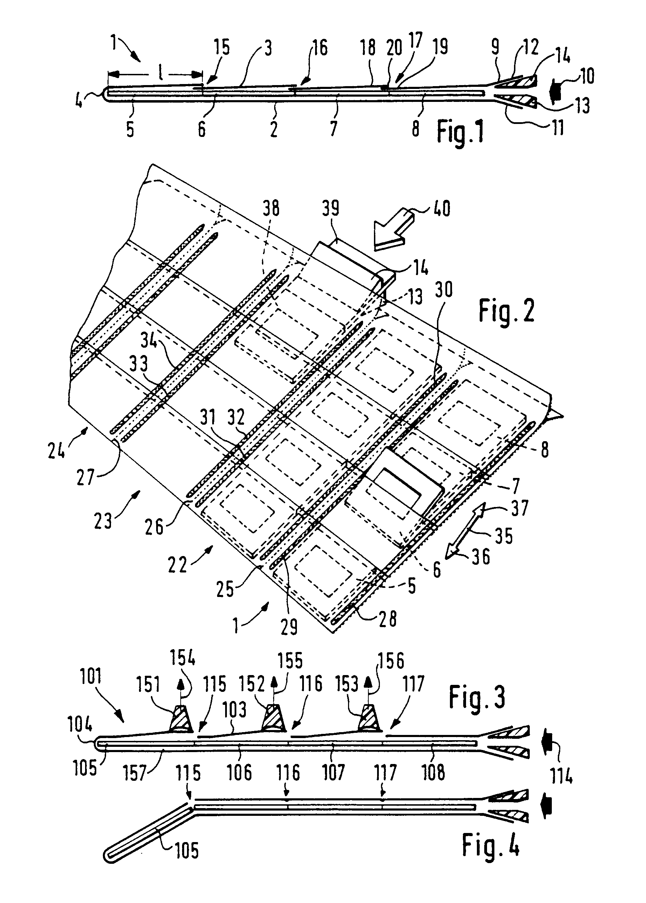

Die in Fig. 1 dargestellte Eintaschfolie 1 besteht aus einer unteren Folie 2 und aus einer oberen Folie 3, die endseitig bei 4 miteinander verbunden sind. Zwischen den beiden Folien 2 und 3 liegen vier Diarahmen 5, 6, 7, 8, die durch die vordere Öffnung 9 in Richtung des Pfeiles 10 eingeschoben worden sind. Sämtliche vier Diarahmen können also durch eine einzige Öffnung 9 der Eintaschfolie 1 hintereinander eingeschoben werden. Die vorderen Ende 11 und 12 der unteren und oberen Folie 2 und 3 werden dabei durch zwei Keile 13 und 14 nach außen abgelenkt, um eine ungehindertes Einführen der Diarahmen zu ermöglichen.

In der oberen Folie 3 sind drei Schlitze 15, 16, 17 vorgesehen. Der Schlitz 15 hat vom hinteren, geschlossenen Ende 4 der Eintaschfolie 1 einen Abstand, der der Lange 1 eines Diarahmens (hier: des Diarahmens 5) entspricht. In entsprechender Weise haben die Schlitze 15, 16, 17 untereinander einen Abstand, der ebenfalls der Länge eines Diarahmens entspricht. Auch der Abstand des vordersten Schlitzes 17 vom vorderen, offenen Ende 12, 13 der Eintaschfolie 1 entspricht etwa der Länge eines Diarahmens (hier: des Diarahmens 8). In dem in Fig. 1 gezeigten Ausführungsbeispiel ist der soeben beschriebene Abstand des vordersten Schlitzes 17 vom vorderen, offenen Ende 12, 13 der Eintaschfolie 1 etwas größer als die Länge eines Diarahmens, damit auch der vorderste Diarahmen 8 mit einem gewissen Sicherheitsabstand vollständig innerhalb der Eintaschfolie 1 zu liegen kommt.

Die obere Folie 3 ist im Bereich der Schlitze 15, 16, 17 überlappend ausgebildet. Dabie überlappt die näher am geschlossenen Ende 4 liegende Folie 18 die an den Schlitz 17 anschließende Folie 19 von außen. Wenn also beispielsweise der Diarahmen 7 an dem Schlitz 17 vorbei in seine in Fig. 1 gezeigte Stellung geschoben wird, wird durch diese Art der Überlappung mit Sicherheit vermieden, daß dieser Diarahmen 7 sich mit der Vorderkante 20 der Folie 3 verhakt. Wie aus Fig. 1 ersichtlich, sind die Überlappungen der Schlitze 15, 16, 17 reusenartig ausgebildet.

Sämtliche Diarahmen 5, 6, 7, 8 werden nacheinander bzw. hintereinander durch die Öffnung 9 der Eintaschfolie 1 in Richtung des Pfeiles 10 eingeschoben. Wenn einer der Diarahmen entnommen werden soll, kann dies auf einfache Weise durch den diesem Diarahmen zugeordneten Schlitz geschehen. Soll beispielsweise der Diarahmen 7 entnommen werden, kann dies durch den Schlitz 17 erfolgen. Zum Diarahmen 6 gehört der Schlitz 16; zum Diarahmen 5 gehört der Schlitz 15. Der vorderste Diarahmen 8 kann auf einfache Weise durch die Öffnung 9 der Eintaschfolie entnommen werden. Einschließlich dieser vordersten Öffnung der Eintaschfolie sind also genausoviele Öffnungen bzw. Schlitze vorhanden wie Diarahmen. In Fig. 1 sind vier Diarahmen 5, 6, 7, 8 vorhanden und vier Entnahmeöffnungen, nämlich die Schlitze 15, 16, 17 und die Öffnung 9 der Eintaschfolie 1.

Fig. 2 zeigt in einer perspektivischen Darstellung mehrere der in Fig. 1 gezeigten Eintaschfolien 1, 22, 23, 24, die an ihren Seitenkanten durch Perforationen 25, 26, 27 miteinander verbunden sind. Die untere und obere Folie einer Eintaschfolie sind dabei jeweils seitlich durch eine Verschweißung 28, 29, 30, 31, 32, 33, 34 miteinander verbunden. Zwischen zwei äußere Verschweißungen liegt jeweils eine Perforation. Beispielsweise liegt zwischen der linken Verschweißung 31 der Eintaschfolie 22 und der rechten Verschweißung 32 der Eintaschfolie 23 die Perforation 26. Durch diese Perforationen 25, 26, 27 können die einzelnen Eintaschfolien bei Bedarf auf einfache Weise voneinander getrennt werden. Die Eintaschfolien können dabei vereinzelt werden; sie können aber auch zu aus mehreren Eintaschfolien bestehenden Einheiten getrennt werden.

Der Doppelpfeil 35 gibt die Einfüllrichtung und die Entnahmerichtung der Diarahmen an. In Richtung des Pfeils 36 werden die Diarahmen in die Eintaschfolie eingebracht. In die entgegengesetzte Richtung 37 können die Diarahmen einzeln entnommen werden. In der Fig. 2 ist der Diarahmen 6 in der Entnahmestellung gezeigt. Er ragt bereits halb aus dem zugehörigen Entnahmeschlitz heraus. Wenn also der Diarahmen 6 entnommen werden soll, ist es nicht erforderlich, auch die bezüglich der Öffnung der Eintaschfolie 1 vor ihm liegenden Diarahmen 7 und 8 zu entnehmen.

Wie aus den Figuren 1 und 2 ersichtlich, sind zur Entnahme der einzelnen Diarahmen eine der Anzahl der Diarahmen entsprechende Anzahl von Entnahmeöffnungen vorgesehen. Bei der Entnahme der Diarahmen kann jede dieser Öffnungen wirksam werden. Beim Befüllen wird jedoch nur eine einzige Öffnung wirksam, nämlich die vordere Öffnung 9 der Eintaschfolie 1. Der Füllvorgang kann also auf einfache Weise durch diese Einfüllöffnung 9 vorgenommen werden, während der Entnahmevorgang für jeden Diarahmen einzeln durch die zugehörige Entnahmeöffnung möglich ist.

In dem in Fig. 2 gezeigte Beispiel sind die Eintaschfolien 1 und 22 bereits vollständig mit Diarahmen gefüllt. Die Eintaschfolie 23 ist in einem Zeitpunk während des Füllvorgangs gezeigt. Der Diarahmen 38 hat die Einführöffnung bereits vollständig passiert, während der Diarahmen 39 erst zur Halte in Richtung des Pfeils 40 in die Eintaschfolie 23 eingeführt worden ist. Dieser Diarahmen 39 befindet sich noch zwischen den Keilen 13 und 14. Wie aus Fig. 2 ersichtlich, stützen sich die Diarahmen 38 und 39 und auch die nachfolgenden, in Fig. 2 nicht dargestellten Diarahmen beim Einfüllen mit ihren Kanten aneinander ab.

Fig. 3 zeigt eine Eintaschfolie 101, bei der die Schlitze 115, 116, 117 nicht überlappend ausgestaltet sind. Die Außenseiten der oberen Folie 103 werden im Bereich der Schlitze 115, 116, 117 durch Vakuumaufnehmer 151, 152, 153 in Richtung der Pfeile 154, 155, 156 angehoben. Zwischen der Unterseite des Vakuumaufnehmers 151 und der Oberseite des zugehörigen Bereichs der oberen Folie 103 wird ein Hohlraum 157 gebildet, der durch in der Zeichnung nicht dargestellte Mittel mit einem Unterdruck versorgt wird. Der Unterdruck in dem Hohlraum 157 kann auch auf einfache Weise dadurch erzeugt werden, daß der Vakuumaufnehmer 151 in einer Richtung entgegen der Pfeilrichtung 154 auf die obere Folie 103 zubewegt wird. Dadurch legt sich diese Folie 103 an die konkav ausgebildete Unterseite des Vakuumaufnehmers 151 vollständig an. Während dieses Anlegens wird die zwischen der oberen Folie 103 und der konkaven Unterseite des Unterdruckaufnehmers 151 befindliche Luft vollständig aus diesem Bereich herausgedrückt. Wenn dann der Vakuumaufnehmer 151 in Richtung des Pfeiles 154 bewegt wird, wird aufgrund der Elastizität der oberen Folie 103 der Hohlraum 157 gebildet. Da dieser Hohlraum durch die Unterkanten des Vakuumaufnehmers 151 vollständig abgedichtet wird, kann keine Luft in diesen Hohlraum 157 eindringen. Durch die soeben beschriebene Volumenvergrößerung bei gleichbleibender Luftfüllung wird also der zum Anheben der Folie 103 erforderliche Unterdruck erzeugt.

Durch die Vakuumaufnehmer 151, 152, 153 wird jeweil der Folienbereich der oberen Folie 103 angehoben, der in Einführrichtung (Pfeil 114) hinter dem jeweiligen Schlitz 115, 116, 117 liegt. Die zugehörigen Kanten der oberen Folie 103 werden also aus dem Bewegungsbereich der Diarahmen 105, 106, 107, 108 entfernt, wodurch ein Anstoßen dieser Diarahmen an die Kanten der oberen Folie 103 mit Sicherheit verhindert wird.

Fig. 4 zeigt die in Fig. 3 dargestellte Eintaschfolie in der Stellung, in der der am weitesten hinten liegende Diarahmen 105 entnommen werden kann. Durch das Abkanten dieses Diarahmens 105 weitet sich der Schlitz 115 auf, und der Diarahmen 105 kann entnommen werden. Die anderen Schlitze 116 und 117 sind nicht abgekantet und bleiben dadurch geschlossen.

## Patentansprüche

1. Eintaschfolie für Diarahmen, bestehend aus einer unteren (2) und einer oberen Folie (3, 103), die zur Aufnahme mehrerer Diarahmen (5, 6, 7, 8; 105, 106, 107, 108) an einem Ende (4) und seitlich miteinander verbunden sind, und die am anderen Ende (11, 12) nicht miteinander verbunden sind, so daß sie dort eine Einfüllöffnung (9) zum Einschieben der Diarahmen bilden,
**dadurch gekennzeichnet,**
daß in der oberen Folie (3, 103) mindestens ein quer verlaufender Schlitz (15, 16, 17; 115, 116, 117) in einem der Länge eines Diarahmens (5, 6, 7, 8; 105, 106, 107, 108) entsprechenden Abstand (1) vom geschlossenen Ende (4) vorgesehen ist.

2. Eintaschfolie nach Anspruch 1, dadurch gekennzeichnet, daß weitere Schlitze (15, 16, 17; 115, 116, 117) jeweils in einem der Länge (1) eines Diarahmens (5, 6, 7, 8; 105, 106, 107, 108) entsprechenden Abstand in der oberen Folie (3, 103) vorgesehen sind.

3. Eintaschfolie nach Anspruch 1 oder 2, dadurch gekennzeichnet, daß die obere Folie (3) im Bereiche jedes Schlitzes (15, 16, 17) überlappend ausgebildet ist.

4. Eintaschfolie nach Anspruch 3, dadurch gekennzeichnet, daß der im Bereich jedes Schlitzes näher am geschlossenen Ende 4 liegende Folienteil (18) den an den Schlitz (17) anschließenden Folienteil (19) außen überlappt.

5. Eintaschfolie nach einem der vorhergehenden Ansprüche, dadurch gekennzeichnet, daß mit der Seitenkante einer Eintaschfolie eine weitere Eintaschfolie verbunden ist.

6. Eintaschfolie nach Anspruch 5, dadurch gekennzeichnet, daß die Verbindungslinie der Eintaschfolie mit der seitlich anschließenden Eintaschfolie perforiert (25, 26, 27) ist.

7. Eintaschfolie nach einem der vorhergehenden Ansprüche, dadurch gekennzeichnet, daß die untere (2) und obere (3) Folie seitlich durch eine Rändelung miteinander verbunden sind.

8. Eintaschfolie nach einem der Ansprüche 1 bis 6, dadurch gekennzeichnet, daß die untere (2) und obere (3) Folie seitlich durch eine Verschweißung (28, 29, 30, 31, 32, 33, 34) miteinander verbunden sind.

9. Eintaschfolie nach einem der vorhergehenden Ansprüche, dadurch gekennzeichnet, daß die endseitige Verbindung der unteren (2) mit der oberen (3) Folie durch eine Faltung (4) gebildet ist.

10. Eintaschfolie nach einem der Ansprüche 1 bis 8, dadurch gekennzeichnet, daß die untere Folie (2) aus einem anderen Material besteht als die obere Folie (3).

11. Verfahren zum Eintaschen von Diarahmen (5, 6, 7, 8; 105, 106, 107, 108) in eine Eintaschfolie nach einem der vorhergehenden Ansprüche,
dadurch gekennzeichnet,
daß die Schlitze aufweisende Folie (103) im Bereich der Schlitze (115, 116, 117) angehoben wird und die Diarahmen (105, 106, 107, 108) anschließend in die Eintaschfolie (101) durch das offene Ende eingeschoben werden.

12. Verfahren nach Anspruch 11, dadurch gekennzeichnet, daß das Anheben der Folie (103) durch Vakuumaufnehmer (151, 152, 153) erfolgt.

13. Verfahren nach Anspruch 11 oder 12, dadurch gekennzeichnet, daß eine Eintaschfolie mit Diarahmen gefüllt wird und daß die seitlich verbundenen Eintaschfolien anschließend senkrecht zur Einfüllrichtung (40) der Diarahmen bewegt werden.

14. Verfahren nach Anspruch 13, dadurch gekennzeichnet, daß die Bewegung der Eintaschfolien senkrecht zur Einfüllrichtung (40) der Diarahmen durch Markierungen auf der Eintaschfolie gesteuert wird, die von einer Abtasteinrichtung erfaßt werden.

15. Verfahren nach Anspruch 14, dadurch gekennzeichnet, daß die Abtasteinrichtung aus einer Lichtschranke besteht.

16. Verfahren nach Anspruch 14 oder 15, dadurch gekennzeichnet, daß die Markierungen aus Transportöffnungen bestehen.

## Claims

1. A sleeve member for slide frames consisting of a bottom sheet (2) and a top sheet (3) that are joined to each other at one end (4) and at their sides for receiving several slide frames (5, 6, 7, 8; 105, 106, 107, 108) and which are not joined to each other at their other end (11, 12), so that they there form a feeding opening (9) for insertion of the slide frames,
**characterized in that**
in the top sheet (3, 103) at least one transverse slit (15, 16, 17; 115, 116, 117) is provided at a distance (1) from the closed end (4), corresponding to the length of one slide frame (5, 6, 7, 8; 105, 106, 107, 108)

2. A sleeve member according to claim 1, characterized in that further slits (15, 16, 17; 115, 116,117) are provided in the top sheet (3, 103) in each case at a distance corresponding to the length (1) of one slide frame (5, 6, 7, 8; 105, 106, 107, 108).

3. A sleeve member according to claim 1 or 2, characterized in that the top sheet (3) is designed with an overlap in the zone of each slit (15, 16, 17).

4. A sleeve member according to claim 3, characterized in that the sheet part (18) lying in the zone of each slit nearer the closed end (4) outwardly overlaps the sheet part (19) adjoining the slit (17).

5. A sleeve member according to one of the preceding claims, characterized in that to the side edge of one sleeve member there is joined a further sleeve member.

6. A sleeve member according to claim 5, characterized in that the line joining the sleeve member to the laterally adjoining sleeve member has perforations (25, 26, 27).

7. A sleeve member according to one of the preceding claims, characterized in that the bottom sheet (2) and the top sheet (3) are laterally joined to each other by a knurl type joint.

8. A sleeve member according to one of claims 1 to 6, characterized in that the bottom sheet (2) and the top sheet (3) are laterally joined to each other by a weld (28, 29, 30, 31, 32, 33, 34).

9. A sleeve member according to one of the preceding claims, characterized in that the end joint of the bottom sheet (2) with the top sheet (3) is formed by a fold (4).

10. A sleeve member according to one of claims 1 to 8, characterized in that the bottom sheet (2) consists of a material different from the top sheet (3).

11. Method for the pocket mounting of slide frames (5, 6, 7, 8; 105, 106, 107, 108) in a sleeve member according to one of the preceding claims,
characterized in that
the sheet (103) having the slits is raised in the zone of the slits (115, 116, 117), and the slide frames (105, 106, 107, 108) are subsequently inserted into the sleeve member (101) through the open end.

12. Method according to claim 11, characterized in that the raising of the sheet (103) is effected by vacuum lifters (151, 152, 153).

13. Method according to claim 11 or 12, characterized in that one sleeve member is filled with slide frames and that the laterally joined sleeve members are subsequently moved perpendicularly to the feeding direction (40) of the slide frames.

14. Method according to claim 13, characterized in that the movement of the sleeve member is controlled perpendicularly to the feeding direction (40) of the slide frames by marks on the sleeve member which are registered by a scanner device.

15. Method according to claim 14, characterized in that the scanner device comprises a light barrier.

16. Method according to claim 14 or 15, characterized in that the marks consist of transport perforations.

## Revendications

1. Feuille de montage pour des caches à diapositives, comprenant une feuille inférieure (2) et une feuille supérieure (3, 103) qui, pour la réception de plusieurs caches à diapositives (5, 6, 7, 8; 105, 106, 107, 108) sont reliées à une extrémité (4) et latéralement les unes aux autres, et qui ne sont pas reliées les unes aux autres à l'autre extrémité (11, 12) de façon à y constituer une ouverture de remplissage (9) pour insérer les caches à diapositives,
caractérisé
en ce qu'au moins une fente s'étendant transversalement (15, 16, 17; 115, 116, 117) est prévue dans la feuille supérieure (3, 103) à un espacement (1) par rapport à l'extrémité fermée (4) correspondant à la longueur d'un cache à diapositives (5, 6, 7, 8; 105, 106, 107, 108).

2. Feuille de montage selon la revendication 1, caractérisée en ce que d'autres fentes (15, 16, 17; 115, 116, 117) sont prévues, respectivement, à un espacement correspondant à la longueur (1) d'un cache à diapositives (5, 6, 7, 8; 105, 106, 107, 108) dans la feuille supérieure (3, 103).

3. Feuille de montage selon la revendication 1 ou 2, caractérisée en ce que la feuille supérieure (3) est réalisée de façon recouvrante au Voisinage de chaque fente (15, 16, 17).

4. Feuille de montage selon la revendication 3, caractérisée en ce que la partie de feuille (18) située au voisinage de chaque fente plus près de l'extrémité fermée (4) recouvre la partie de feuille (19) faisant suite à la fente (17) vers l'extérieur.

5. Feuille de montage selon l'une des revendications précédentes, caractérisée en ce qu'une feuille de montage supplémentaire est reliée à l'arête latérale d'une feuille de montage.

6. Feuille de montage selon la revendication 5, caractérisée en ce que la ligne de liaison (25, 26, 27) de la feuille de montage avec la feuille de montage suivant latéralement est perforée.

7. Feuille de montage selon l'une des revendications précédentes, caractérisée en ce que les feuilles inférieure (2) et supérieure (3) sont reliées les unes aux autres par un moletage.

8. Feuille de montage selon l'une des revendications 1 à 6, caractérisée en ce que les feuilles inférieure (2) et supérieure (3) sont reliées latéralement les unes aux autres par un soudage (28, 29, 30, 31, 32, 33, 34).

9. Feuille de montage selon l'une des revendications précédentes, caractérisée en ce que la liaison côté extrême de la feuille inférieure (2) avec la feuille supérieure (3) est réalisée par un pliage (4).

10. Feuille de montage selon l'une des revendications 1 à 8, caractérisée en ce que la feuille inférieure (2) est réalisée en un autre matériau que la feuille supérieure (3).

11. Procédé pour le montage de caches à diapositives (5, 6, 7, 8; 105, 106, 107, 108) dans une feuille de montage selon l'une des revendications précédentes, caractérisé en ce que la feuille (103) présentant des fentes est soulevée au voisinage des fentes (115, 116, 117), et que les caches à diapositives (105, 106, 107, 108) sont ensuite insérés dans la feuille de montage (101) à travers l'extrémité ouverte.

12. Procédé selon la revendication 11, caractérisé en ce que le soulèvement de la feuille (103) est effectué par un dispositif leveur à vide (151, 152, 153).

13. Procédé selon la revendication 11 ou 12, caractérisé en ce qu'on remplit une feuille de montage de cache à diapositives, et en ce que les feuilles de montage reliées latéralement sont déplacées ensuite perpendiculairement à la direction d'insertion (40) des caches à diapositives.

14. Procédé selon la revendication 13, caractérisé en ce que le déplacement des feuilles de montage perpendiculairement à la direction d'insertion (40) des caches à diapositives est commandé par des marquages sur la feuille de montage qui sont détectées par un dispositif palpeur.

15. Procédé selon la revendication 14, caractérisé en ce que le dispositif palpeur est constitué par un barrage photo-électrique.

16. Procédé selon la revendication 14 ou 15, caractérisé en ce que les marquages sont constitués par des ouvertures de transport.
